J.C.H. Ellis, C.B.E., M.A., F.R.S.C.
H.A. Gura, B.Sc.(Eng.), C.Eng., M.I.Mech.E.
E.L. Ellis, B.Sc.(Eng.), A.C.G.I.
D.C. Harrison, M.A., M.I.T.M.A.
I.M. Armitage, B.Sc.
H.C.E. Paget, M.A.
M.F. Ford, M.A., M.Sc., D.Phil.
T.R. Calderbank, B.Sc.

*CONSULTANT:*
E. Armitage, C.B., M.A.

*TRADE MARKS:*
D.J. Woods, M.I.T.M.A.
R.A.B. Cotterell, M.A., M.Litt., M.I.T.M.A.

CHARTERED PATENT AGENTS
EUROPEAN PATENT ATTORNEYS

PATENTS, DESIGNS AND TRADEMARKS

# MEWBURN ELLIS & CO.

## 2/3 Cursitor Street, London EC4A 1BQ.

### Telephone: 01-405 4405

Telegrams: PATENT LONDON EC4  Telex: 22762 PATENT G
Telecopier (Groups 2 and 3): + 44 1 405 9339
DX 51 LONDON

Branches at NEWCASTLE UPON TYNE, SHEFFIELD and BRISTOL

European Patent Office,
P.O. Box 5818 Patentlaan 2,
2280 HV Rijswijk (ZH),
Netherlands.

26th August 1987

Our Ref.    GPS/LCB          Your Ref.

Dear Sirs,

## EUROPEAN PATENT APPLICATION 87.305976.0 OF R.A. SISK

Please would you correct, as provided for by Rule 88, the following minor clerical errors that have been discovered in the description. The correct version is in each case immediately evident.

Page 3 line 15: "desired" should be "derived".

Page 4 line 5: "valves" should be "values".

Page 5 line 2: "valve-pairs" should be "value-pairs".

Page 5 line 11: "take" should be "taken".

Page 8 line 17: "collant" should be "coolant".

Page 9 line 25: delete the comma after "fact".

Page 10 line 20: "ot" should be "to".

Page 12 line 3: "temeprature" should be "temperature".

Page 16 line 15: "=" should be in the gap in the equation.

Page 17 line 6: "feed" should be "feet".

Page 17 line 7: "constrain" should be "constraint".

Page 18 line 14: "this" should be "This".

Yours faithfully,

H.A. GURA.
AUTHORISED REPRESENTATIVE.

Europäisches Patentamt

European Patent Office

Office européen des brevets

(19)

(11) Publication number: **0 298 164**

**A1**

(12) # EUROPEAN PATENT APPLICATION

(21) Application number: **87305976.0**

(22) Date of filing: **07.07.87**

(51) Int. Cl.⁴: **F02G 5/04 , F01K 17/02**

A request for correction of the description has been filed pursuant to Rule 88 EPC. A decision on the request will be taken during the proceedings before the Examining Division (Guidelines for Examination in the EPO, A-V, 2.2).

(43) Date of publication of application:
**11.01.89 Bulletin 89/02**

(84) Designated Contracting States:
**AT BE CH DE FR GB IT LI LU NL SE**

(71) Applicant: **Sisk, Robert Atwood**
**615 Cherry Brook Road**
**North Canton Connecticut 06059(US)**

(72) Inventor: **Sisk, Robert Atwood**
**615 Cherry Brook Road**
**North Canton Connecticut 06059(US)**

(74) Representative: **Gura, Henry Alan et al**
**MEWBURN ELLIS & CO. 2/3 Cursitor Street**
**London EC4A 1BQ(GB)**

(54) **Generating heat and electricity.**

(57) Apparatus and method for generating thermal and electrical energy, in which thermal energy is derived from an internal combustion engine (12) by a flow of coolant and electrical energy is derived from an A.C. generator (14) driven by the engine (12). Outputs required of the apparatus are determined automatically by a control system (50) which monitors the required loads and then adjusts the relative outputs of the engine (12) and generator (14) to optimal levels. Engine speed is variable without affecting the generator output frequency because of e.g. an epicyclic gear train (42) between engine (12) and generator (14). The apparatus may be used in combination with external energy sources, monitoring these and adjusting its own outputs according to efficiency; on a substantial drop in electric power from the external source the system may by automatic override cause maximum output from the electrical generator (14) regardless of the thermal load.

Fig.1.

EP 0 298 164 A1

## "GENERATING HEAT AND ELECTRICITY".

The present invention relates to devices and techniques for generating thermal (heat) energy and electrical energy and, more particularly, to devices and methods adapted to provide heat and electricity to buildings and the like in association with heat and electricity normally provided by public utilities.

Devices designed to generate both heat and electricity are well known in the art. Some examples of such devices are disclosed in U.S. Patents No. 1,552,661; No. 1,761,894; No. 2,051,240; and No. 4,164,660. In these particular patents, cogeneration units are disclosed having a central power plant that generally consists of an internal combustion engine powered by diesel or other types of fuel. Waste heat from the central power plant is utilized to heat water for thermal heating purposes, and the power output of the plant is designed to run a generator to generate electricity. U.S. Patent No. 2,130,606 shows a similar type of system which is specifically adapted to heat or cool a residence while simultaneously producing electricity for the residence.

Thermal energy is derived from coolant fluid flowing through the central power unit and drawing heat therefrom as well as from the hot exhaust gases generated by the central power unit. U.S. Patents No. 4,065,055 and No. 4,264,826 both disclose cogeneration systems which utilize engine exhaust gases for heating and cooling purposes. Finally, U.S. Patent No. 2,637,305 discloses a similar type of cogeneration system whereby the coolant fluid is first passed through the engine to take up heat and is further heated by the hot exhaust gases from the engine in a heat exchange system. The heat retained by the coolant fluid is then utilized for heating purposes.

One problem that is common to all of the above identified prior art cogeneration systems is that the internal combustion engine or other unit utilized as a power source to run an electrical generator must be operated at a speed which provides a constant speed output. Thus, the constant-speed constraint of a conventional generator set requires that the power unit, i.e. generally an internal combustion engine, also be run at a constant speed. This is highly inefficient since the output of the engine is then limited to a fraction of its total capability, and the efficiency of the unit generally drops dramatically when the engine is operated at reduced load. Moreover, the fact that varying the engine's speed in response to varying thermal loads inevitably changes the output frequency of the generator and thus the electrical output is a severe handicap in all the aforementioned prior art systems.

Addressing these problems among others, the invention provides an apparatus for generating thermal and electrical energy outputs in response to thermal and electrical load requirements imposed thereon. The apparatus includes a variable speed power source, preferably an internal combustion engine, and a system for transferring thermal energy from the power source to a coolant fluid. Means for generating AC electrical energy are also provided and are driven by the power source to produce electrical energy for the electrical load. The output frequency of the generator can be independent of the speed of the power source. A mechanism is also provided for extracting the thermal energy from the coolant fluid and directing it to the thermal load. Finally, a control system is provided for monitoring the loads and controlling the thermal and electrical outputs in response thereto by independently varying the speed of the power source and the output frequency of the generator to provide desired thermal and electrical energy outputs.

Various means may be used to provide the necessary independence of engine speed and generator output frequency. If the generator is a synchronous generator requiring to be driven at a fixed speed to produce a fixed frequency, the engine and generator may be connected by drive means having a variable speed input and constant speed output, such as a gear train having variable speed drives. For example, this could be an epicyclic gear train. An AC frequency control means may be coupled to the gear train to govern the generator output. Alternatively AC electric ouput may be desired from a DC motor generator with an AC converter, or from a wound rotor generator. Then the generator may be driven directly from the engine, e.g. through a belt linkage or hydraulic assembly.

Derivation of thermal energy may be by a primary heat exchanger adapted to transfer thermal energy from the coolant fluid to a second fluid directed to the thermal load. The heat exchanger may also be adapted to transfer thermal energy from exhaust gas from the engine to a second fluid directed to the thermal load e.g. by a preliminary heat exchanger for transferring heat energy from the exhaust gas to the coolant fluid. The coolant fluid itself may derive heat energy not only from the engine itself, but also from some or all component portions associated therewith, e.g. a gearbox.

The control system used preferably comprises a computer to calculate desired outputs on the basis of the monitored loads. Desirably the system is adapted to maintain the valves of the engine speed and generator output within a mathematically predetermined range providing substantially optimum performance and economy of operation for the apparatus.

Monitoring of the electric demand of a facility supplied by the apparatus may be by means of a conventional transducer, while the thermal load may be calculated by the control system on the basis of monitored difference in temperature of the second fluid travelling to and from the thermal load.

The apparatus of the invention may also be used to supply thermal and electrical energy to a facility that also has available thermal and electrical energy inputs from external sources. The control system may then include means for monitoring the thermal and electrical energy inputs from the sources and adjusting the apparatus' thermal and electrical ouputs in relation to those inputs to provide substantially optimum performance and economy of operation, during normal energy load requirements. In this case the control system may take account of the availability and cost of the energy from the outside sources as well as the running costs of the apparatus in calculating the desired outputs from the latter. The system may be adapted to shut down the apparatus if this is found to be economically desirable. Then extra parameters relating to the external sources may thus be used in calculating a mathematically predetermined range of desirable valve-pairs for the apparatus' engine speed and generator output frequency.

Furthermore, the control system may incorporate override means which, when a substantial decrease in the monitored external electrical energy input is detected (e.g. in the case of a power cut), or when the external electrical power availability drops substantially below the electrical load requirement of the facility, automatically operates the apparatus at maximum electrical output, or at sufficient output to meet the electrical requirement of the facility, without regard for the thermal and economic restraints normally take into account.

The apparatus when used to augment external sources in this way may also be adapted to provide a reverse electrical power flow, from the apparatus to the external source, when this is found advantageous.

The invention also provides a method of supplying thermal and electrical energy to thermal and electrical loads of a facility using a combination of electrical and thermal inputs from external sources and a cogeneration apparatus wherein a generator for generating AC electrical output is driven by a variable speed engine, thermal energy being derived from the engine by a coolant fluid and the thermal and electrical outputs produced thereby being supplied to the respective loads, characterized by using an automatic control system to monitor the values of the thermal and electrical loads of the facility and of the inputs from the external sources, to calculate desired thermal and electrical outputs of the cogeneration apparatus taking account of the monitored values and of stored economic factors relating to the operation of the apparatus and to the external energy sources, and to adjust the speed of the engine and the output of the generator independently, without affecting the generator output frequency, to produce the desired thermal and electrical outputs from the cogeneration apparatus.

By way of example, an embodiment of the invention will now be described with reference to the accompanying drawings in which:

Fig. 1 is a schematic of an apparatus for generating heat and electricity;

Fig. 2 is a graph displaying output versus rotational speed of a typical internal combustion engine/generator cogeneration unit;

Fig. 3 is a graph illustrating continuous power rating versus rotational speed of an internal combustion engine/generator cogeneration unit;

Fig. 4 is a graph illustrating heat rejection of an internal combustion engine to its coolant and exhaust versus rotational speed;

Fig. 5 is a graph illustrating power output versus heat rejection of an internal combustion engine/generator cogeneration unit and is obtained by combining the plots illustrated in Figs. 3 and 4;

Fig. 6 is a graph illustrating constant rotation speed of an internal combustion engine/generator cogeneration unit at varying power outputs versus heat rejection modes; and

Fig. 7 is a graph substantially identical to that of Fig. 6 but illustrating an operating range of thermal and electrical power outputs of the present invention which are mechanically and economically viable.

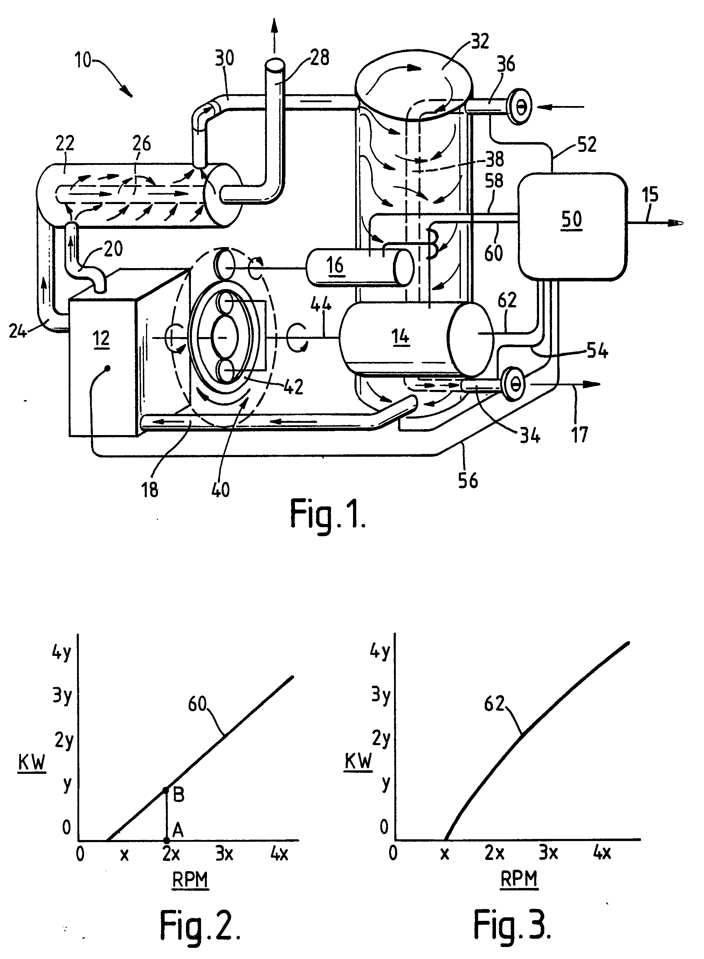

Referring now to the figures, and particularly to Fig. 1, a device 10 is disclosed for cogenerating both heat and electricity simultaneously. The device 10 includes a prime mover 12 which, in the preferred embodiment, is a variable speed internal combustion engine of conventional design. The prime mover may be powered by diesel, gasoline or any other conventional fuel source. An AC electrical generator 14 is also provided and is adapted to be driven by the engine 12. The generator 14 may be e.g. a fixed speed generator adapted to maintain a maximum sixty cycle electric frequency. The generator 14 is arranged to provide the electrical energy output 15 of the device 10, and to this end any known type of generator 14 may be utilized therewith so long as it is adapted to conform with the remaining portions of the device 10 as explained in detail below. A frequency control motor 16 is also provided in conjunction with the generator 14 for adjusting the frequency output thereof as further described below.

The thermal output 17 of the device 10 is provided by the heat generated from the engine 12. To maximize the thermal output, heat from both the engine block as well as the exhaust gases is captured and then delivered to the thermal load served by the device 10. In the illustrated embodiment, a coolant fluid input line 18 is directed to the engine 12. As a coolant fluid passes through the engine 12, thermal energy is transferred thereto and is directed through the output line 20 to a preliminary heat exchanger 22. The exhaust gases of the engine 12 are captured and delivered through an exhaust outlet 24 to the heat exchanger 22. The exhaust gases pass through the heat exchanger 22, and more particularly through the exchange piping 26, and are then exhausted from the system through the outlet pipe 28. The coolant fluid passes into the exchanger 22 from the engine 12, flows around the pipe 26, and receives additional heat from the exhaust gases passing though the pipe 26. The fluid then passes out of the exchanger 22 through an exchanger outlet pipe 30 and is directed to a primary heat exchanger 32.

In the preferred embodiment, the thermal energy output 17 of the device 10 is delivered to a facility or the like through a hot water outlet 34. While water is used and referred to herein, it will be understood that any appropriate fluid may be used to deliver the thermal energy output 17. Once the facility has extracted or used the thermal energy delivered to it from the outlet 34, the cooled water is then returned to the primary heat exchanger 32 through an inlet 36. The cooled facility water (or secondary fluid) passes through the heat exchanger 32 by way of piping 38. Thus, thermal energy from the heated collant fluid entering the heat exchanger 32 is transferred to the facility or secondary water within the piping 38 so as to provide hot water from the outlet 34. Once the coolant fluid has passed the entire length of the heat exchanger 32 and has delivered its thermal energy to the water contained within the piping 38, it is then redirected to the input line 18, thereby forming a closed loop system for the coolant fluid. The thermal energy delivered by the cogeneration device 10 to the thermal load takes advantage of all the thermal energy sources within the device 10. This means that thermal energy available from any gear boxes as well as engine oil is also captured by the coolant fluid within the engine container 12.

An important feature of the embodiment shown is the mechanism 40 utilized to interconnect the engine 12 with the generator 14 and which permits the speed of the engine 12 to be varied without varying the output of the generator 14. The mechanism 40, therefore, represents a variable speed input and a constant speed output device. This permits increased output availability and/or improved partial efficiency of the device 10. The mechanism 40 may be any one of several electrical and/or mechanical devices which provide a variable speed input and a constant frequency output. Examples of such potential mechanisms include gear trains with variable speed drives, DC motor generators with AC converters, and wound rotor induction generators or co-called universal transformers. While the final selection concerning which of these specific arrangements is best suited for a particular application may be made following a comparative analysis of the first and life-cycle costs of each, one of the preferred mechanisms 40 which is illustrated in Fig. 1 is an epicyclic gear train 42.

With the gear train 42, the speed of the engine 12 may be varied thereby providing a variable speed input. However, the gear train 42 is adapted to provide a constant speed output along the shaft 44 so as to drive the generator 14 at a constant speed. Thus, as the engine speed 12 varies in accordance with thermal load requirements, the gear train 42 automatically adjusts the gearing so as to provide a constant speed output to the generator 14. This is due to the fact, that the required rotational speed of the generator 14, typically, may be computed from the following equation (1):

Speed = (120 x frequency)/Number of Generator Poles     (1)

Thus, for a typical four pole generator, a consistent input speed of 1,800 RPM is required to maintain a constant 60 Hz output. Through the use of the epicyclic gear train 42, this may be maintained while simultaneously varying the speed of the engine 12. The gear train 42 is also coupled to the frequency control motor 16 so as to permit the frequency of the generator 14 to be adjusted in accordance with electrical loads imposed on the device 10 by the facility without affecting or requiring changes in the speed of the engine 12. Thus, when less than a maximum electrical load is required from the generator 14, electrical output of the generator 14 may be reduced in accordance with electrical load requirements independent of the thermal load of the facility. Likewise, as the thermal load requirements of the facility increase or decrease, the speed of the engine may be increased or decreased accordingly to produce more or less heat while maintaining whatever desired electrical output is needed up ot the maximum of the generator 14.

A unit monitoring and control system 50 is provided for monitoring thermal and electrical loads being addressed by the device 10 as well as for controlling the thermal and electrical outputs of the device 10 in accordance with the load requirements being monitored. The control system 50 monitors both loads and adjusts the speed of the engine 12 to meet the electrical load while approximating as closely as possible the thermal load requirement. Simultaneously, the system monitors the cost efficiency of this continued operation and determines when it is economically desirable to cease operation of the device 10 and import the required heat and electricity from other sources. For example, if the device 10 is utilized to provide heat and electricity for a building, the building also has heat and electrical power sources provided by the public untility service. The control system 50 then considers the economics involved and determines to what extent the heat and electrical loads of the building should be met by outside sources and/or by the device 10. Finally, the monitor system 50 continuously monitors the incoming voltage from the public utility and automatically starts up the device 10 to provide maximum electrical output regardless of the thermal load requirement of the bulding in the event of a utility power outage which substantially decreases or completely eliminates electric power input from the public utility source.

Electric demand is the parameter accorded top priority by the monitoring and control system 50. To avoid a complex system of load-shedding devices, the cogeneration device 10 is designed to be capable of meeting the maximum electric load of the facility in which it is installed or that portion of the facility's electric load which is to be provided by the cogeneration device 10. While the electric load of the facility in which the device 10 is installed may be monitored by any conventional means, the control system 50 preferably monitors the electrical demand and load of the facility directly by means of a conventional transducer.

The control system 50 also monitors the thermal demand of the facility by monitoring the change of temeprature of the facility's secondary water coolant from the point where it leaves the device 10 at outlet 34 to the point where the water returns to the device 10 at inlet 36. The greater the thermal demand of the facility, the greater the temperature difference between the water leaving the pipe 34 and returning at pipe 36. This thermal demand may be in the form of heating the building during winter months, for example, or cooling the building with a refrigeration unit during summer months. Control leads 52 and 54 are illustrated and used for monitoring the thermal load of the facility. The control system 50 likewise monitors fuel flow to the engine 12 by means of a gaseous or liquid flow meter (not illustrated), as applicable. The cost of electricity and heat from the outside public utility source as well as the fuel used by the engine 12 are fed into the memory of the control system 50. This may be done by any conventional means and preferably by standard microchip techniques. This information is used in calculations carried out by the control system 50 as described in greater detail below.

The control system 50 also includes leads 56 leading to the engine 12 to control the speed thereof, and leads 58, 60 and 62 leading to the frequency control motor 16 and the generator 14 in order to control the electrical output of the device 10.

During normal operation of the device 10, the control system 50 monitors electrical energy demand from a facility in which the device 10 is installed until a predetermined load is reached. The control system 50 then sends a signal to lock the frequency control motor 16, start the engine 12 and drive the engine 12 up to synchronous generator speed. The system then completes a warmup cycle. The control system 50 monitors the thermal load and varies the engine speed of the engine 12 while maintaining the electrical load requirements. The control system 50 selects the speed of the engine 12 which best matches the electrical load and the heat load. The frequency control motor 16 speeds up or slows down as required to maintain a 60 Hz output for the generator 14. The control system 50 also continuously monitors the incoming voltage from the outside public utilities sources. If a voltage drop occurs thereby signalling a substantial decrease of electrical energy available from the public utilities service, such as in an energy blackout or brownout situation, the control system 50 automatically operates the device 10 at maximum electrical output while dumping heat into the atmosphere as required depending upon the thermal load of the facility. The key to this override scheme is that the thermal requirements of the facility are ignored along with preferred economic operational ranges in such energency situations.

Referring now to Figs. 2 to 7, the plot 60 of Fig. 2 illustrates power output versus rotational speed of a typical internal combustion engine 12. If the engine 12 were directly connected to the generator 14 as in many prior art schemes, the engine 12 would be limited to a fixed speed necessary to operate the generator 14 at a constant speed. Thus, the output of the engine 12 would be limited to the maximum capacity of that engine 12 at the particular speed selected. The available power range at that speed is depicted, for example, in Fig. 2 by the line A-B. Under such circumstances, not only is the output limited to a fraction of the engine's capability, but the efficiency of the engine drops dramatically when the engine is operated at reduced load. Thus, the presently described capability of varying the engine's speed without changing the output frequency of the generator 14 substantially increases the available output and/or improved partial load efficiency.

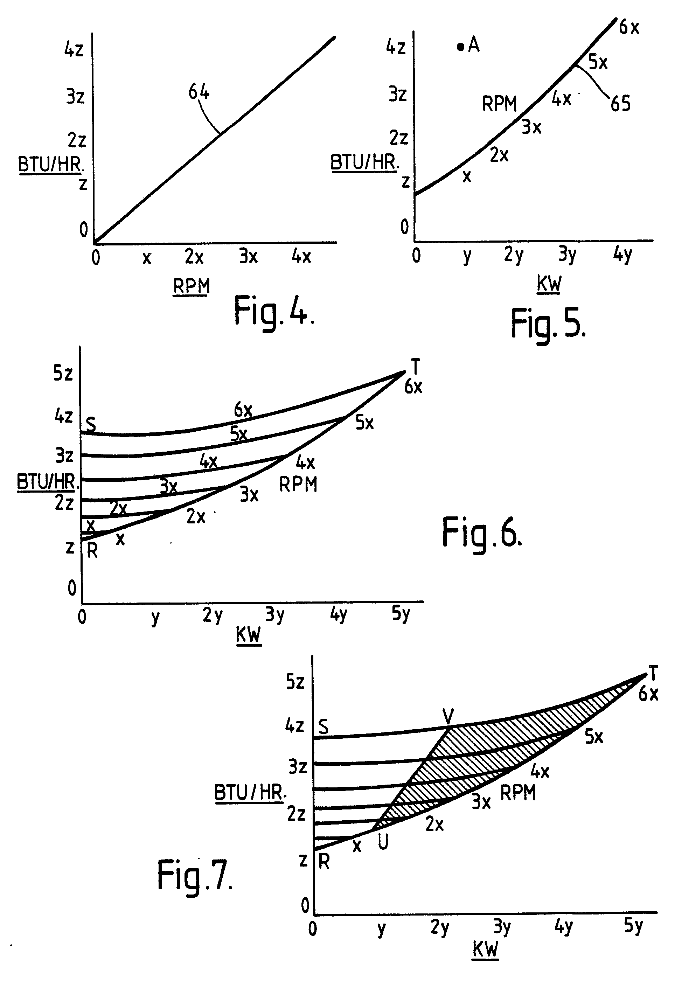

As a result of the above, it is evident that it is always desirable to operate the engine 12 as nearly as possible to its continuous rating at a given speed in order to maximize the efficiency and minimize the operating costs of the engine 12. Fig. 3 illustrates a plot 62 showing the continuous power rating versus the rotational speed of the engine 12 coupled directly to a generator. As is illustrated, the power output drops to zero while the speed of the engine is still positive. This is due to the power required by the engine 12 to overcome its own internal friction losses. Similarly, in Fig. 4, a typical plot 64 of heat rejection by the engine 12 to both its coolant and exhaust versus the rotation speed of the engine 12 is illustrated. If Figs. 3 and 4 are combined into a single plot, the result is the curve 65 depicted in Fig. 5 illustrating the relationship of power output versus heat rejection at various speeds of the engine 12 coupled to the generator 14.

In ideal situations, the thermal and electrical loads imposed on the device 10 would always plot along the continuous rating curve 65 of Fig. 5. However, in practice, this is not the case. For example, in the case of a winter night wherein the device 10 is providing heat and electricity to a building, the thermal load imposed by the building requirements would be at its peak, while the electric load would be extremely low. Under these conditions, the thermal and electric loads of the building would plot in Fig. 5 somewhere in the area depicted by way of example by point A. This point is clearly considerably off the continuous rating line 65. This would mean that the engine 12 would be required to operate at a higher speed but at reduced load. Plotting lines of constant speed at varying thermal and electric loads results in the graph illustrated by Fig. 6. This graph represents engine speed (lines X-6X) at any given electric and thermal load requirements while assuming, for the purposes of the graph illustrated in Fig. 6, that the maximum electric output of which the generator 14 is capable is as represented by 5y. Utilizing a plot of the type illustrated in Fig. 6, it is possible to select the proper operating speed whenever the electric and thermal demand loads are known. Obviously, the electrical and thermal demands must fall within the capabilities of the engine 12 and the generator 14, and this is represented by the area enclosed by the lines R-S, S-T, and T-R. These three lines describe the thermal and electric capabilities of the engine 12 and the generator 14.

Although any point within the surface R-S-T-R defined above in Fig. 6 is potentially possible, many of the points thereon are not economical for the device 10 to meet. This is due to the fact that the cogeneration device 10 must take advantage of both the electric and thermal outputs in order to overcome the large scale economies enjoyed by the public utility providing electricity to the facility for thermal and electric loads therein. Points R and S, for example, are not desirable operating points for the device 10 since no electricity is produced, and it is highly inefficient to operate the engine 12 solely to recover heat therefrom to meet the thermal requirements of the facility. It is, therefore, necessary to apply an additional constraint to the control system 50 which reflects the economics of the application of the device 10. Such a constraint must include the demand for, and value of, electricity, heat and fuel as well as some factor to account for the capital, operation and maintenance costs of the device 10. A cost/benefit computation permits the control system 50 to determine whether or not continued operation of the device 10 is economically desirable. This computation takes the form of equation (2):

$$(kW \times CkW) + (BTU \times CBTU) (F \times CF) \times K \quad - \quad (2)$$

In the above equation (2), kW is the electric demand imposed on the cogeneration device in kilowatts; CkW is the cost per kilowatt-hour of electricity from the public utility source; BTU is the thermal load per hour imposed on the cogeneration unit 10, in thermal units; CBTU is the cost per thermal unit of heat for the facility from other sources such as electricity, oil or natural gas including the inefficiencies encountered in converting the fuel to useful heat energy; F is the fuel flow rate to the engine 12 of the cogeneration device 10; CF is the cost per unit volume of the cogeneration device's fuel and K is a constant greater than 1.0 which takes into account the cost of money, wear and tear on the unit 10, maintenance and any other factor which should bear on the economics of operating the unit 10. Obviously, as K increases, so do the constraints imposed on operation of the cogeneration unit 10, thereby reducing the frequency and duration of use thereof. Any appropriate consistent set of units can be used for the above quantities, e.g. Btitish Thermal Units, dollars, cubic feed etc.

Superimposing the economic constrain represented by equation (2) on Fig. 6 provides the graph illustrated in Fig. 7. The graph in Fig. 7 is virtually identical to that of Fig. 6 except for the presence of line U-V which represents the aforementioned economic constraint. The shaded area defined, then, by lines U-V, V-T, and T-U describes the operating range which is both mechanically and economically feasible for the device 10. Under normal operation of the device 10, when the control system 50 monitors the thermal and electric load requirements demanded from the device 10 and finds they are within the shaded area depicted in Fig. 7, the cogeneration unit 10 will be operated to meet those load requirements by varying the speed of the engine 12 and the electric output of the generator 14 independently. Likewise, should the control system 50 determine that the thermal and/or electrical load requirements fall outside the shaded area in Fig. 7, the cogeneration unit 10 will not be operated.

As previously mentioned, the control system 50 also monitors the electrical voltage of the power input from the public utility source to the facility wherein the device 10 is installed. In a situation where there is a blackout or brownout, the voltage from the public utility source will drop substantially or cease entirely. Under such circumstances, the control system 50 is adapted to sense this substantial drop in voltage, and to initiate the start sequence of the device 10. The cogeneration device 10 is then brought up to operating condition in order to meet the electric load of the facility or at least to produce maximum electric output available from the device 10. The economic and thermal constraints normally imposed on the operation of the device 10 are overridden and dismissed in this emergency mode of operation unless they are compatible with the electric demand. In other words, when a power outage occurs, the control system 50 ignores the normal thermal and economic constraints and operates at the engine speed which provides the electricity demand at the cogeneration unit's continuous rating unless both the thermal and economic constraints plot within the shaded area depicted in Fig. 7. this implies that the cogeneration unit 10 will operate inefficiently and even dump heat to the atmosphere, if required, in order to provide electricity to the facility in such an emergency situation. Should the power outage occur while the cogeneration unit 10 is already in its normal operating mode, the control system 50 will monitor this and prevent the unit 10 from switching back to utility power regardless of the economic and thermal constraints. Depending on the constant speed input/constant frequency output device selected for use with the device 10, it may be necessary to fix the engine 12 at generator synchronous speed in order to maintain a constant frequency in the absence of the power source utility reference signal.

As can be seen from the above, the device described provides an extremely economic and efficient system for generating both thermal and electric power to a facility in coordination and conjunction with power available from a public utility source. It may also provide maximum electric power under emergency situations where there is a blackout or brownout from a public utility source. Moreover, because of the capability of varying engine speed without affecting the output frequency of the generator of the unit, the cogeneration device presently described can independently meet thermal and electrical load requirements of the facility, unlike prior art designs.

The control system, however, will operate the system only under circumstances which provide maximum efficiency and economics of operation when considering the costs of power available from public utilities sources, unless the system is being operated in its emergency mode sequence.

## Claims

1. Apparatus for generating thermal and electrical energy outputs in response to thermal and electrical loads, wherein a generator (14) for generating A.C. electrical output is driven by a variable speed engine (12) and thermal energy is derived from the engine (12) by a coolant fluid, characterized in that the engine speed is variable without affecting the output frequency of the generator (14), and in that the apparatus includes a control system (50) having means for monitoring said thermal and electrical loads and for adjusting the speed of the engine (12) and the output frequency of the generator (14) independently to adjust thereby the thermal and electrical energy outputs in response to the loads.

2. Apparatus according to claim 1 wherein a drive between the engine (16) and generator (14) comprises an epicyclic gear train (40) to allow independent variation of the engine speed.

3. Apparatus according to claim 2 wherein said epicyclic gear train is coupled to a control motor (16) for controlling the output frequency of the generator (14).

4. Apparatus according to claim 1 wherein the generator (14) comprises a DC generator with an AC converter.

5. Apparatus according to any one of the preceding claims wherein the control system (50) is adapted to maintain the values of the engine speed and generator output automatically within a mathematically predetermined field of optimised operational efficiency and economy.

6. Apparatus according to any one of the preceding claims, adapted for output to thermal and electrical loads of a facility that is also provided with electrical and thermal energy inputs from an external source or sources independent of the apparatus, in which the control system (50) has means for monitoring the thermal and electrical loads of the facility and the thermal and electrical energy availability from said external source or sources, means for storing cost factors relating to the external energy source or sources and to the operation of the apparatus, and means for independently adjusting the speed of the engine (12) and the output frequency of the generator (14) to provide desired thermal and electrical outputs to said facility, calculated by the control system (50) in dependence on said loads, inputs and cost factors.

7. Apparatus according to claim 5 and claim 6 wherein the control system (50) is adapted to take account of the availability, efficiency and cost factors of the energy inputs from the independent external sources in predetermining said optimised field, and including provisions for shutting down the apparatus if optimal.

8. Apparatus according to claim 6 or claim 7 wherein the control system (50) comprises means for overriding normal operation and adjusting the output of the generator (14) to substantially its maximum upon detecting a substantial drop in the electrical energy availability from the external source.

9. Apparatus according to any one of claims 6 to 8 wherein the control system (50) comprises means for causing a reverse power flow, from said apparatus to said outside source or sources.

10. A method of supplying thermal and electrical energy to thermal and electrical loads of a facility using a combination of electrical and thermal inputs from external sources and a cogeneration apparatus (10) wherein a generator (14) for generating A.C. electrical output is driven by a variable speed engine (12), thermal energy being derived from the engine (12) by a coolant fluid and the thermal and electrical outputs produced thereby being supplied to the respective loads, characterized by using an automatic control system (50) to monitor the values of the thermal and electrical loads of the facility and of the inputs from the external sources, to calculate desired thermal and electrical outputs of the cogeneration apparatus (10) taking account of the monitored values and of stored economic factors relating to the operation of the apparatus (10) and to the external energy sources, and to adjust the speed of the engine (12) and the output of the generator (14) independently, without affecting the generator output frequency, to produce the desired thermal and electrical outputs from the cogeneration apparatus (10).

11. A method according to claim 8 wherein on detecting a substantial drop in the electrical energy input from said external source, the control system (50) overrides its normal operation regime and adjusts the apparatus (10) for substantially maximum electrical energy output from the generator (14).

12. A method according to claim 8 or claim 9 wherein the control system (50) maintains the values of the engine speed and the generator output automatically within a mathematically predetermined field of optimised operational efficiency and economy.

Fig.1.

Fig.2.

Fig.3.

Fig. 4.

Fig. 5.

Fig. 6.

Fig. 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 275 311 (AGAZZONE) <br> * Abstract; column 3, lines 31-35; figure 1 * | 1-3 | F 02 G   5/04 <br> F 01 K  17/02 |
| A | | 10 | |
| Y | GB-A-2 149 150 (TAKASHI TAKAHASHI) <br> * Abstract; page 2, lines 43-129; figure 1 * | 1-3 | |
| A | US-A-3 944 837 (MEYERS) <br> * Abstract; column 7, line 65 - column 10, line 30; figure 2 * | 1-3,10 | |
| A | US-A-4 572 961 (BORGER) <br> * Abstract; column 3, lines 14-46; figure 1A * | 1-3 | |
| A | US-A-4 613 760 (LAW) <br> * Abstract; figure 1 * | 1-3 | |
| A | DE-A-2 550 899 (SCHMIEDEL) | | **TECHNICAL FIELDS SEARCHED (Int. Cl.4)** |
| A | FR-A-2 526 484 (FIAT) | | F 02 G |
| A | DE-A-3 341 891 (LÄNDER) | | F 01 K <br> H 02 P |
| A | US-A-2 953 691 (RAPP) | | H 02 K <br> G 05 D |

The present search report has been drawn up for all claims

| Place of search | Date of completion of the search | Examiner |
|---|---|---|
| THE HAGUE | 19-02-1988 | ERNST J.L. |